# EUROPEAN PATENT APPLICATION

(11) **EP 2 709 234 A1**
(43) Date of publication of application: **19.03.2014**
(21) Application number: 12785892.6
(22) Date of filing: 11.05.2012
(51) Int. Cl.: H02J 7/00, H01M 10/44, H02J 7/02

(54) **PORTABLE TERMINAL DEVICE, CHARGING METHOD AND PROGRAM**

(30) Priority: 13.05.2011 JP 2011108077
(71) Applicant: NEC CASIO Mobile Communications, Ltd., Kawasaki-shi Kanagawa 211-8666 (JP)
(72) Inventor: EIFUKU Naoki, Kanagawa 211-8666 (JP)
(74) Representative: Vossius & Partner
(86) International application number: PCT/JP2012/062163
(87) International publication number: WO 2012/157567

(57) **Abstract**

A portable terminal device is provided which is capable of notifying a user of a use status of external power supplies when there are a plurality of external power supplies for charging. A portable terminal device includes a secondary battery which is charged with power supplied from any one of a plurality of external power supplies, a detection unit which detects that each of the plurality of external power supplies has been connected, a power supply status determination unit which determines a power supply status indicating whether charging using the plurality of external power supplies is possible based on a detection result of the detection unit, a selection unit which selects an external power supply to be used for charging from among the plurality of external power supplies based on the power supply status of each of the plurality of external power supplies determined by the power supply status determination unit, and priority orders of the external power supplies which are orders of selecting the external power supply which supplies the power to the secondary battery from among the plurality of external power supplies, a charging unit which charges the secondary battery with the power supplied from the external power supply selected by the selection unit, and an output unit which outputs information indicating the external power supply selected by the selection unit.

## Description

### TECHNICAL FIELD

The present invention relates to a portable terminal device, a charging method, and a program.

### BACKGROUND ART

Patent Document 1 describes a method for notifying of a charging status during charging, and proposes technology for performing notification of an estimated time and a charging amount when charging is performed from a commercial power supply to a rechargeable battery.

Incidentally, in recent years, a plurality of types of external power supplies such as photovoltaic power generation, wind power generation, and a fuel cell have been used in addition to commercial power supply as external power supplies used for charging. Furthermore, a plurality of types of connection modes such as a connection mode in which charging is performed through a direct connection of an external power supply to a portable terminal device, a connection mode in which charging is performed through placement on a charging stand, and a connection mode in which charging is performed in a non-contact manner are used as connection modes with an external power supply.

Therefore, Patent Document 2 proposes technology in which in a portable communication terminal with a plurality of adapter connection terminals, a specification of a charging adapter connected to each adapter connection terminal is recognized, a charging path is selected based on information on the specification, a charging control scheme is determined, and charging control is performed.

### Prior Art Documents

### Patent Documents

Patent Document 1: Japanese Unexamined Patent Application, First Publication No. 2010-193560
Patent Documents 2: Japanese Unexamined Patent Application, First Publication No. 2004-336951

### SUMMARY OF INVENTION

### Problems to be solved by the Invention

However, there is a problem in that, as various external power supplies or various connection modes become available as described above, it is difficult for a user to recognize a status relating to charging of a portable terminal device, such as an external power supply currently used for charging or an external power supply most suitable for charging.

The present invention has been made in view of such circumstances, and an exemplary object thereof is to provide a portable terminal device, a charging method, and a program capable of notifying a user of a use status of external power supplies when there are a plurality of external power supplies for charging.

### Means for Solving the Problems

In order to solve the above-described problem, a portable terminal device in accordance with an exemplary embodiment of the present invention includes: a secondary battery which is charged with power supplied from any one of a plurality of external power supplies; a detection unit which detects that each of the plurality of external power supplies has been connected; a power supply status determination unit which determines a power supply status indicating whether charging using the plurality of external power supplies is possible based on a detection result of the detection unit; a selection unit which selects an external power supply to be used for charging from among the plurality of external power supplies based on the power supply status of each of the plurality of external power supplies determined by the power supply status determination unit, and priority orders of the external power supplies which are orders of selecting the external power supply which supplies the power to the secondary battery from among the plurality of external power supplies; a charging unit which charges the secondary battery with the power supplied from the external power supply selected by the selection unit; and an output unit which outputs information indicating the external power supply selected by the selection unit.

Furthermore, in order to solve the above-described problem, a charging method in accordance with an exemplary embodiment of the present invention is a charging method for charging a secondary battery with power supplied from any one of a plurality of external power supplies, and the method includes: detecting whether each of the plurality of external power supplies has been connected; determining a power supply status indicating whether charging using the plurality of external power supplies is possible based on a detection result; selecting an external power supply to be used for charging from among the plurality of external power supplies based on the determined power supply status of each of the plurality of external power supplies, and priority orders of the external power supplies which are orders of selecting the external power supply which supplies the power to the secondary battery from among the plurality of external power supplies; charging the secondary battery with power supplied from the selected external power supply; and outputting information indicating the selected external power supply.

Furthermore, in order to solve the above-described problem, a program in accordance with an exemplary embodiment of the present invention causes a computer to execute: a detection function of detecting that each of a plurality of external power supplies has been connected; a power supply status determination function of determining a power supply status indicating whether charging using the plurality of external power supplies is possible based on a detection result of the detection function; a selection function of selecting an external power supply to be used for charging from among the plurality of external power supplies, based on the power supply status of each of the plurality of external power supplies determined through the power supply status determination function, and priority orders of the external power supplies which are orders of selecting the external power supply which supplies power to the secondary battery from among the plurality of external power supplies; a charging function of charging the secondary battery with the power supplied from the external power supply selected through the selection function; and an output function of outputting information indicating the external power supply selected through the selection function.

### Exemplary Advantage of the Invention

According to the present invention, it is possible to notify a user of a use status of external power supplies when there are a plurality of external power supplies for charging.

### BRIEF DESCRIPTION OF DRAWINGS

FIG. 1 is a block diagram illustrating a configuration of a portable terminal device in an exemplary embodiment of the present invention.
FIG. 2 is a flowchart for describing an operation of a portable terminal device 10 in the present exemplary embodiment.
FIG. 3A is a schematic view illustrating a display example of a display unit 15 in the present exemplary embodiment.
FIG. 3B is a schematic view illustrating a display example of the display unit 15 in the present exemplary embodiment.
FIG. 3C is a schematic view illustrating a display example of the display unit 15 in the present exemplary embodiment.

### MODES FOR CARRYING OUT THE INVENTION

Hereinafter, an exemplary embodiment of the present invention will be described with reference to drawings.

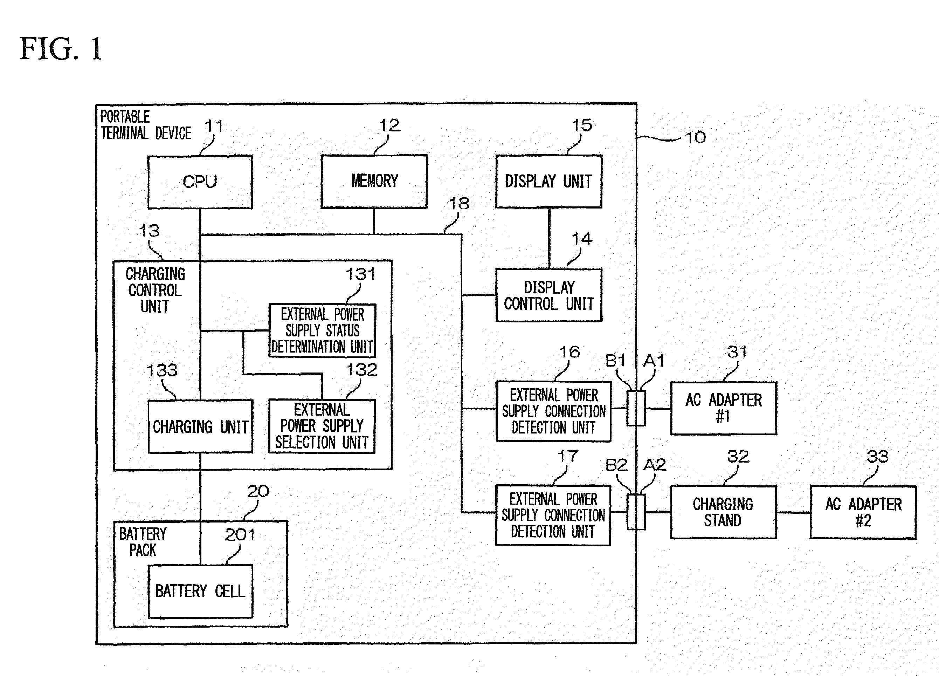

FIG. 1 is a block diagram illustrating a configuration of a portable terminal device in an exemplary embodiment of the present invention. In FIG. 1, the portable terminal device 10 includes a central processing unit (CPU) 11, a memory 12, a charging control unit 13, a display control unit 14, a display unit 15, external power supply connection detection units 16 and 17, and a battery pack 20. The CPU 11 executes a program stored in the memory 12 to control each unit. The memory 12 stores the program to be executed by the CPU 11, and data such as priority orders on external power supply connection indicating which of a plurality of external power supplies is preferentially connected when the plurality of external power supplies are connected.

The charging control unit 13 includes an external power supply status determination unit 131, an external power supply selection unit 132, and a charging unit 133.

The external power supply status determination unit 131 determines a power supply status indicating whether charging using an external power supply is available. This external power supply status determination unit 131 determines whether power sufficient for charging is supplied from a connected external power supply, and determines that charging from the external power supply is possible if the power sufficient for charging is supplied. In contrast, if the power sufficient for charging is not supplied, the external power supply status determination unit 131 determines that charging from the external power supply is impossible.

Furthermore, when the portable terminal device 10 is connected to the external power supply via a power supply device, the external power supply status determination unit 131 determines the presence or absence of a physical connection with the power supply device. In other words, the external power supply status determination unit 131 determines whether the power sufficient for charging is supplied from the external power supply in a situation in which there is a connection with the power supply device.

The external power supply selection unit 132 selects the external power supply to be used for charging from among a plurality of external power supplies, based on the power supply status of the external power supplies determined by the external power supply status determination unit 131 as well as the priority orders of the external power supplies determined in accordance with the power supply status in advance, which are orders for selecting the external power supply which supplies power to a battery cell 201, which is a secondary battery among the plurality of external power supplies. More specifically, the external power supply selection unit 132 selects, as an external power supply to be used for charging, the external power supply having the highest priority order from among external power supplies which supply power sufficient for charging based on a result of the external power supply status determination unit 131 determining the status of the external power supplies. In other words, when the power sufficient for charging is not supplied from the external power supply, even if the priority order of the external power supply is high, the external power supply selection unit 132 excludes the external power supply from selection candidates and does not select the external power supply as the external power supply to be used for charging.

The charging unit 133 charges the battery cell 201 constituting the battery pack 20 with the power supplied from the external power supply selected by the external power supply selection unit 132 under control of the CPU 11.

The display control unit 14 controls the display unit 15 under the control of the CPU 11.

The display unit 15 includes a liquid crystal display, an organic electroluminescence (EL) display or the like, and displays various pieces of information. Particularly, in the present exemplary embodiment, the display unit 15 displays, during charging, information on the external power supply which is being used for charging, a power supply status of the connected external power supplies, and a charging status.

The power supply status refers to information indicating whether charging using the external power supplies is available. This power supply status includes, for example, connection status information indicating whether the external power supply is connected to the portable terminal device 10 and information indicating availability based on whether sufficient power necessary for charging is supplied from the external power supply. It is to be noted that although details will be described below, the connection status indicating that the external power supply is connected to the portable terminal device 10 refers to a situation in which the portable terminal device 10 is physically connected to a charge stand or an alternating current (AC) adapter so that power can be supplied from the external power supply via the charge stand or the AC adapter. Furthermore, the availability information is information indicating whether the sufficient power necessary for charging is supplied from the external power supply in the situation in which the portable terminal device 10 is physically connected to the external power supply.

The charging status includes information indicating a battery residual amount during charging and a remaining time until full charging. Furthermore, the CPU 11 is connected to each unit in the device via a bus 18.

The external power supply connection detection unit 16 detects that a contact switch (not illustrated) provided on the side of a connection terminal B1 provided in the portable terminal device 10 is pressed by the connection terminal B1 and turned ON as a connection terminal A1 of an AC adapter 31 is inserted into the connection terminal B1. This external power supply connection detection unit 16 detects that the contact switch on the side of the connection terminal B1 is pressed and turned ON, and supplies, to the charging control unit 13, a detection signal indicating that the AC adapter (#1) 31, which converts an AC voltage of a commercial power supply to an appropriate DC voltage and supplies the DC voltage, has been connected to the portable terminal device 10.

The external power supply connection detection unit 17 detects that a contact switch (not illustrated) provided on the side of a connection terminal B2 provided in the portable terminal device 10 is pressed by the connection terminal B2 and a setting switch is turned ON as a connection terminal A2 of a charging stand 32 is inserted into the connection terminal B2. This external power supply connection detection unit 17 detects that the contact switch on the side of the connection terminal B2 is pressed and turned ON, and supplies, to the charging control unit 13, a detection signal indicating the fact that the portable terminal device 10 has been placed on the charging stand 32 has been detected.

It is to be noted that a connection of the connection terminal A1 of the AC adapter 31 may be detected using an optical or electromagnetic sensor provided on the side of the portable terminal device 10 rather than the contact switch in the connection terminal B1. Furthermore, placement of the portable terminal device 10 on the charging stand 32 may be detected using a mechanical, optical, or electromagnetic sensor provided on the side of the portable terminal device 10 rather than using the connection terminal B2 pressed when the portable terminal device 10 is placed on the charging stand 32.

The AC adapter (#1) 31 uses a commercial power supply as the external power supply and converts an AC voltage of the commercial power supply to an appropriate DC voltage. This AC adapter (#1) 31 has the connection terminal A1, which is connected electrically when inserted into the connection terminal B1 of the side of the portable terminal device 10.

An AC adapter (#2) 33 uses the commercial power supply as the external power supply and converts an AC voltage of the commercial power supply to an appropriate DC voltage. This AC adapter (#2) 33 is electrically connected to the charging stand 32. The charging stand 32 has the connection terminal A2 arranged at a place where the connection terminal B2 of the side of the portable terminal device 10 comes into contact therewith when the portable terminal device 10 is placed thereon.

When the portable terminal device 10 is placed on the charging stand 32, the connection terminal A2 of the side of the charging stand 32 and the connection terminal B2 of the side of the portable terminal device 10 are connected electrically.

In the illustrated example, while the commercial power supply is used as the external power supplies on both sides, the commercial power supply is recognized as different external power supplies since the commercial power supply is connected with the different connection terminals. Furthermore, while only the commercial power supply is used as the external power supply in the illustrated example, an external power supply using photovoltaic power generation, a power supply using wind power generation, an external power supply of a fuel cell using a chemical reaction, an external power supply in a non-contact mode (an external power supply using electromagnetic induction) and the like may be prepared as the external power supplies.

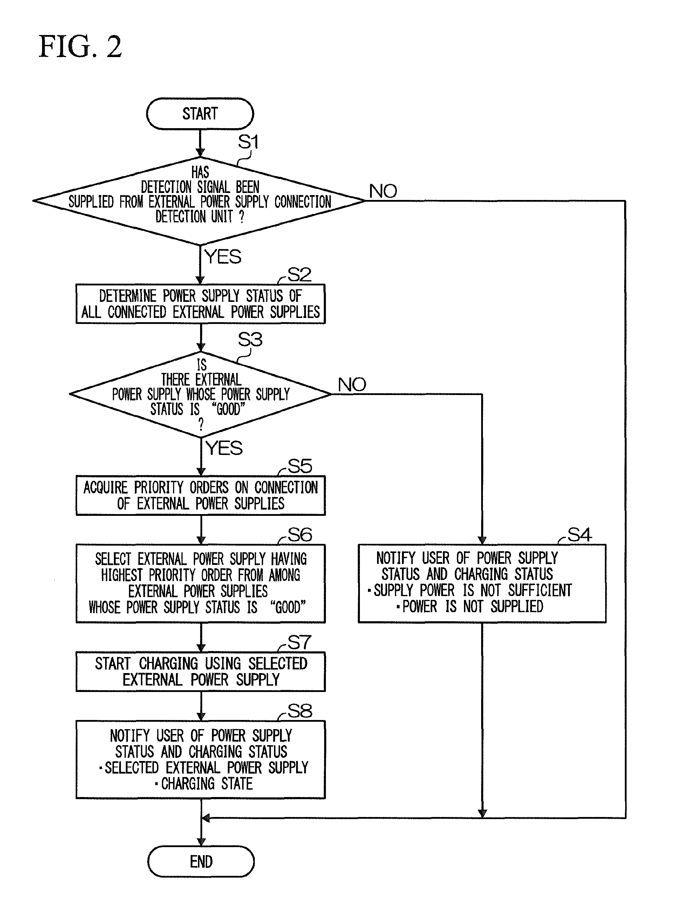

FIG. 2 is a flowchart describing operation of the portable terminal device 10 in the present exemplary embodiment. It is to be noted that an example in which the portable terminal device 10 is connected to the external power supplies via the AC adapters 31 and 33, which are power supply devices, and the charging stand 32 as illustrated in FIG. 1 will be described in the present exemplary embodiment.

First, the CPU 11 determines whether a detection signal is supplied from the external power supply connection detection unit 16 or 17 (step S1). In FIG. 1, once the AC adapter 31 is connected with the portable terminal device 10, the detection signal is supplied from the external power supply connection detection unit 16 to the CPU 11. Furthermore, once the portable terminal device 10 is placed on the charging stand 32 and thus the contact switch on the side of the connection terminal B2 is pressed, the detection signal is supplied from the external power supply connection detection unit 17 to the CPU 11. Also, if the detection signal is not supplied from any of the external power supply connection detection units 16 and 17 to the CPU 11 (step S1-NO), the portable terminal device 10 is not connected to the AC adapter (#1) 31 and the portable terminal device 10 is not placed on the charging stand 32, and therefore the CPU 11 ends the process.

In contrast, if the detection signal is supplied from any one or both of the external power supply connection detection units 16 and 17 (step S1-YES), the external power supply status determination unit 131 determines the power supply status of all the connected external power supplies (step S2). The external power supply status determination unit 131 determines, as the power supply status, whether power sufficient for charging is supplied from at least one of the AC adapter 31 and the AC adapter 33 determined to have been connected, based on the detection signal. The external power supply status determination unit 131 determines "good" if the power sufficient for charging is supplied and "bad" if the power sufficient for charging is not supplied.

Also, the CPU 11 determines whether there is an external power supply whose power supply status is "good" based on a determination result of the external power supply status determination unit 131 (step S3). In FIG. 1, for example, it is assumed that the AC adapter 33 connected to the charging stand 32 is not connected to an outlet while the AC adapter 31 is connected to an outlet. In this case, since the power sufficient for charging is not supplied from the AC adapter 33 connected to the charging stand 32, the external power supply status determination unit 131 determines that the power supply status of the external power supply supplied via the charging stand 32 is "bad". In contrast, since the power sufficient for charging is supplied from the AC adapter 31, the external power supply status determination unit 131 determines that the power supply status of the external power supply supplied via the AC adapter 31 is "good".

Also, if there is no external power supply whose power supply status is "good" (step S3-NO), the CPU 11 controls the display control unit 14 to display the power supply status and the charging status on the display unit 15 without charging the battery cell 201 of the battery pack 20 (step S4). In this case, an availability status based on whether a supply voltage of the connected external power supply is sufficient is displayed for each external power supply as the power supply status. Furthermore, a residual charging amount, a remaining time until full charging, and the like are displayed as the charging status.

In contrast, if there is at least one external power supply whose power supply status is "good" (step S3-YES), the external power supply selection unit 132 acquires the priority orders indicating connection orders of the external power supplies from the memory 12 (step S5). In the example illustrated in FIG. 1, it has been determined in advance that the priority order of the side of the AC adapter 33 connected to the charging stand 32 is high and the priority order of the side of the AC adapter 31 is low The priority orders are set in the memory 12.

The external power supply selection unit 132 then selects the external power supply having the highest priority order from among the external power supplies whose power supply status is "good" (step S6). In the example illustrated in FIG. 1, the priority order of the side of the AC adapter 33 connected to the charging stand 32 is high, but its power supply status has been determined to be "bad", as described above. In contrast, the priority order of the side of the AC adapter 31 is low, but its power supply status has been determined to be "good". Therefore, the external power supply selection unit 132 selects the external power supply connected via the AC adapter 31 based on this determination result. In other words, the AC adapter 33 connected to the charging stand 32 has a high priority order, but its power supply status has been determined to be "bad". Therefore, the external power supply selection unit 132 excludes the external power supply on the side of the AC adapter 33 from selection candidates. Thus, in the present exemplary embodiment, the external power supply having the highest priority order is selected as the external power supply to be used for charging from among the external power supplies whose power supply status is "good".

The CPU 11 then controls the charging unit 133 of the charging control unit 13 to start charging of the battery cell 201 of the battery pack 20 with the power from the selected external power supply (step S7). In the example illustrated in FIG. 1, since the side of the AC adapter 31 is selected, the charging of the battery cell 201 with the power from the AC adapter 31 starts.

The CPU 11 then controls the display control unit 14 to display the power supply status and the charging status on the display unit 15 (step S8). In this case, for example, the fact that a supply voltage of the external power supply which has not been selected is not sufficient is displayed as the power supply status. Furthermore, the external power supply selected for charging and a charging state (e.g., a battery residual amount and a remaining time until charging completion) are displayed as the charging status. Furthermore, when the other external power supply having a low priority order which has not been selected is connected even though its power supply status is "good", the fact that the other external power supply is available may be displayed. Furthermore, the fact that the AC adapter 33 connected to the charging stand 32, which has a high priority order but its power supply status is determined to be "bad", has been excluded from the selection candidates as described in the example illustrated in FIG. 1 and/or a cause thereof may be displayed.

It is to be noted that the priority orders on connection of the external power supply may be the previously determined priority orders, as described above; alternatively, the power supply status of the external power supply may be determined and the external power supply most suitable for charging at that time may then be preferentially selected as the external power supply to be used for charging.

For example, when the commercial power supply (including the AC adapter) and the power supply using photovoltaic power generation are used as external power supplies, if both of the power supplies are connected, power which can be obtained by the photovoltaic power generation is used for a given period of time (a short period of time), a determination is made as to whether the power that can be obtained by photovoltaic power generation is greater than or equal to a previously determined threshold, if the power is less than the threshold, the commercial power supply (via the AC adapter) is preferentially selected, and if the power is greater than or equal to the threshold, the power supply using photovoltaic power generation is preferentially selected.

Furthermore, a residual amount of the battery cell 201 of the portable terminal device 10 is detected, if the residual amount is small, the commercial power supply (using the AC adapter) with which a charging time is relatively shorter may be preferentially selected, and if the residual amount is present to some extent, the external power supply using photovoltaic power generation with which the charging time is relatively longer may be preferentially selected.

In the operation described above, a connection pattern of the external power supply and a notification for a user (the power supply status of the external power supply, and the charging status) are summarized as follows.
(1) When the external power supply has been connected but sufficient power is not supplied
   In this case, a user is notified of a status of non-connection with the external power supply.
   The external power supply connection detection unit 16 detects a connection of the AC adapter (#1) 31. The external power supply connection detection unit 17 detects placement of the portable terminal device 10 on the charging stand 32 (a switch SW being pressed). Therefore, even if the AC adapter (#1) 31 is connected or the portable terminal device 10 is placed on the charging stand 32, the AC adapter (#1) 31 and (#2) 33 are not necessarily connected to the AC power supply (commercial power supply).
   For example, when the AC adapter (#2) 33 connected to the charging stand 32 is not connected to an outlet, the power necessary for charging is not supplied despite the user places the portable terminal device 10 on the charging stand 32. In this case, a user is notified of the fact that the AC adapter (#2) 33 is connected but the AC adapter (#2) 33 is not connected to the outlet or the fact that it is unavailable. In such a case, notification of the fact that charging using another external power supply is possible may be performed.
(2) When one external power supply is connected and sufficient power is supplied
   In this case, a user is notified of a power supply status of the external power supply which is being used for charging, and a charging status.
(3) When two or more external power supplies are connected and there are both the external power supply from which sufficient power is supplied and the external power supply from which sufficient power is not supplied
   In this case, a user is notified of the external power supply which is being used for charging. Furthermore, notification of the fact that the other external power supply which is not being used for charging can be released may also be performed. Furthermore, when the power supply status of the external power supply having a high priority order is "bad", instead of such an external power supply, the user may be notified of an external power supply which is actually being used for charging.

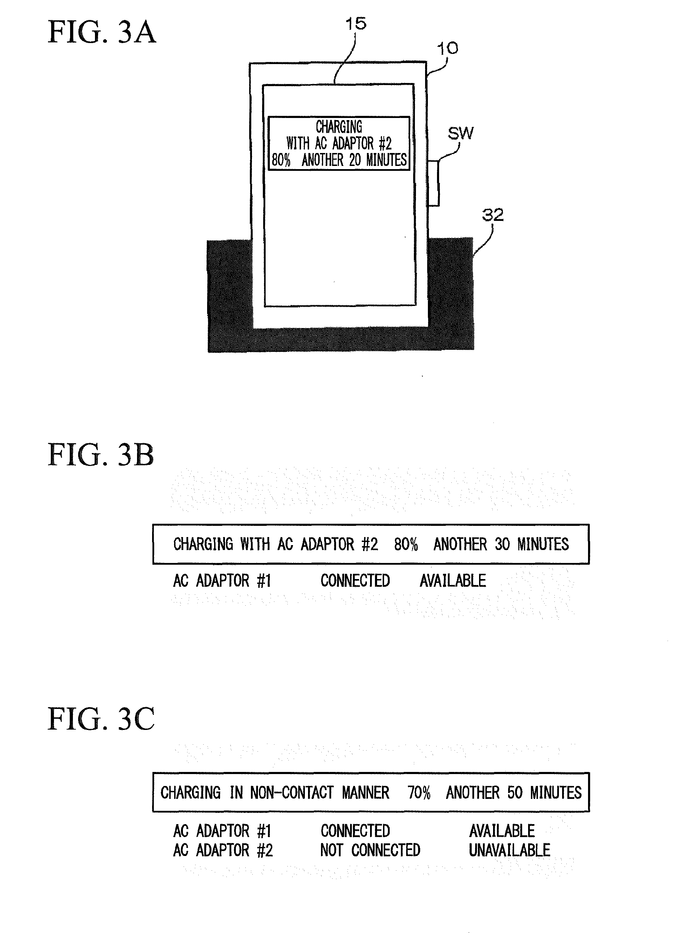

FIGS. 3A to 3C are schematic diagrams illustrating display examples of the display unit 15 in the present exemplary embodiment. For example, when a connection of the connection terminal A1 of the AC adapter (#1) 31 to the connection terminal B1 of the side of the portable terminal device 10 is detected and placement of the portable terminal device 10 on the charging stand 32 is detected through pressing of the switch SW provided in the portable terminal device 10, if the priority order of the side of the charging stand 32 is high, the battery cell 201 is charged with the power supplied from the AC adapter (#2) 33 connected to the charging stand 32. In this case, the fact that charging is being performed from the AC adapter (#2) 33 connected to the charging stand 32 is displayed on the display unit 15, as shown in FIG. 3A. Moreover, a battery capacity "80%", a remaining time until full charging "another 20 minutes", and the like are also displayed as the charging status.

Furthermore, in addition to displaying the external power supply (AC adapter #2) which is being used for charging, a battery capacity "80%" and a remaining time until full charging "another 30 minutes" as the charging status, and the like, and a connection status "connected" of the other external power supply "AC adapter #1", an availability status "available", and the like are also displayed as a power supply status related to the other external power supply, as shown in FIG. 3B.

Furthermore, a display example when non-contact charging is performed is illustrated in FIG. 3C. In other words, in addition to displaying "charging in non-contact manner" for the external power supply which is being used for charging, a battery capacity "70%" and "another 50 minutes" which is a remaining time until full charging as the power supply status, and the like, a connection status "connected" and an availability status "available" of another external power supply "AC adapter #1", a connection status "not connected" and an availability status "unavailable" of still another external power supply "AC adapter #2", and the like are also displayed as the charging status for the other external power supplies.

Accordingly, for example, when a plurality of external power supplies are connected with the portable terminal device 10, it is possible to notify the user of the external power supply which is supplying power to charge the battery cell 201 among the plurality of external power supplies connected with the portable terminal device 10.

Furthermore, when the AC adapter (#2) 33 connected to the charging stand 32 is not connected to the commercial power supply (outlet) even though the portable terminal device 10 is placed on the charging stand 32, the user can be notified of the fact that charging is not being performed.

In the exemplary embodiment described above, when connection of a plurality of external power supplies is detected, the power supply status of the plurality of external power supplies (whether the power sufficient for charging is supplied) is determined, the external power supply having the highest priority order is selected from among external power supplies whose power supply status is "good", and charging is performed using the selected external power supply. In this case, various pieces of information such as the external power supply which is being used for charging, the charging status, the power supply status of the other external power supplies, and the like is displayed on the display unit 15. Therefore, the user can be notified of a use status of the external power supplies when there are a plurality of external power supplies for charging.

It is to be noted that the exemplary embodiment described above is also applicable to a portable terminal device which includes a display unit, a speaker unit, a light emitting diode (LED) unit, and a vibrator unit and which is capable of being charged in a non-contact manner, such as a portable telephone, a personal data assistance (PDA), or a laptop personal computer (PC).

Furthermore, in the exemplary embodiment described above, while the external power supply status determination unit 131 and the external power supply selection unit 132 are provided in the charging control unit 13, the present exemplary embodiment is not limited thereto, and they may be operated as a function on program execution of the CPU 11.

Furthermore, a process of each unit may be performed by recording a program for realizing all or some functions of the portable terminal device described above in a computer-readable recording medium, loading the program recorded in the recording medium on a computer system, and executing the program. The computer system includes an operating system (OS) and hardware such as peripheral devices. Furthermore, the computer system includes a homepage providing environment (or display environment) if a World Wide Web (WWW) system is being used.

The computer-readable recording medium refers to a portable medium such as a flexible disk, a magnetic optical disc, a read only memory (ROM), or a compact disc (CD)-ROM, or a storage device such as a hard disk embedded in the computer system. Furthermore, the computer-readable recording medium also includes a recording medium that dynamically holds a program for a short period of time, such as a communication line when the program is transmitted over a network such as the Internet or a communication line such as a telephone line or a recording medium that holds a program for a given period of time, such as a volatile memory inside a computer system acting as a server or a client in such a case. Furthermore, the program may be a program for realizing some of the above-described functions or may be a program capable of realizing the above-described functions through a combination with a program already recorded in the computer system.

While the present invention has been described above using the exemplary embodiment, a technical scope of the present invention is not limited to the scope described in the exemplary embodiment described above. It is apparent to those skilled in the art that various changes or improvements can be made to the exemplary embodiment. It is apparent from the recitation of claims that modes in which the various changes or improvements have been made can be included within the technical scope of the present invention.

This application is based upon and claims the benefit of priority from Japanese Patent Application No. 2011-108077, filed on May 13, 2011, the disclosure of which is incorporated herein in its entirety by reference.

### INDUSTRIAL APPLICABILITY

The present invention is applicable to a portable telephone, a PDA, a laptop PC or the like. In the present invention, a user can be notified of a use status of the external power supplies when there are a plurality of external power supplies for charging.

### Description of Reference Signs

- 10: portable terminal device
- 11: CPU
- 12: memory
- 13: charging control unit
- 131: external power supply status determination unit
- 132: external power supply selection unit
- 133: charging unit
- 14: display control unit
- 15: display unit
- 16, 17: external power supply connection detection unit
- 18: bus
- 20: battery pack
- 201: battery cell
- 31, 33: AC adapters (#1) and (#2)
- 32: charging stand

## Claims

1. A portable terminal device comprising:
a secondary battery which is charged with power supplied from any one of a plurality of external power supplies;
a detection unit which detects that each of the plurality of external power supplies has been connected;
a power supply status determination unit which determines a power supply status indicating whether charging using the plurality of external power supplies is possible based on a detection result of the detection unit;
a selection unit which selects an external power supply to be used for charging from among the plurality of external power supplies based on the power supply status of each of the plurality of external power supplies determined by the power supply status determination unit, and priority orders of the external power supplies which are orders of selecting the external power supply which supplies the power to the secondary battery from among the plurality of external power supplies;
a charging unit which charges the secondary battery with the power supplied from the external power supply selected by the selection unit; and
an output unit which outputs information indicating the external power supply selected by the selection unit.

2. The portable terminal device according to claim 1, wherein when the power supply status determination unit determines that there are external power supplies available for charging, the selection unit selects an external power supply having a highest priority order from among the external power supplies determined to be available for charging as the external power supply to be used for charging of the secondary battery.

3. The portable terminal device according to claim 1 or 2, wherein the output unit outputs information indicating a status of charging from the external power supply to the secondary battery using the charging unit.

4. The portable terminal device according to any one of claims 1 to 3, wherein the priority orders are dynamically changed to select an external power supply most suitable for charging as the external power supply to be used for charging of the secondary battery in accordance with at least one of the power supply status of each of the plurality of external power supplies determined by the power supply status determination unit and a state of the secondary battery.

5. The portable terminal device according to any one of claims 1 to 4, wherein the plurality of external power supplies include at least one of a commercial power supply, a power supply using photovoltaic power generation, a power supply using wind power generation, a fuel cell using a chemical reaction, and a power supply in a non-contact mode.

6. The portable terminal device according to any one of claims 1 to 5, wherein a mode of a connection between the plurality of external power supplies and the portable terminal device includes at least one of a connection mode in which an external power supply and the portable terminal device are connected via a connection terminal, a connection mode in which the portable terminal device is placed on a charging stand to connect the portable terminal device with an external power supply, and a connection mode in which an external power supply and the portable terminal device are connected electromagnetically in a non-contact manner.

7. The portable terminal device according to any one of claims 1 to 6, wherein the detection unit determines whether the portable terminal device is connected to each of the plurality of external power supplies via a power supply device,
the power supply status determination unit determines whether sufficient power necessary to charge the secondary battery is supplied from the power supply device when the detection unit detects that the power supply device is connected to the portable terminal device, and determines that charging using the external power supply is impossible despite the power supply device is connected with the external power supply if the sufficient power necessary to charge the secondary battery is not supplied from the external power supply connected via the power supply device, and
the output unit outputs information indicating that the sufficient power necessary to charge the secondary battery is not supplied from the external power supply despite the power supply device is connected with the external power supply if the power supply status determination unit determines that charging using the external power supply is impossible despite the power supply device is connected with the external power supply.

8. The portable terminal device according to any one of claims 1 to 7, wherein the output unit outputs information indicating the power supply status.

9. A charging method for charging a secondary battery with power supplied from any one of a plurality of external power supplies, the method comprising:
detecting whether each of the plurality of external power supplies has been connected;
determining a power supply status indicating whether charging using the plurality of external power supplies is possible based on a detection result;
selecting an external power supply to be used for charging from among the plurality of external power supplies based on the determined power supply status of each of the plurality of external power supplies, and priority orders of the external power supplies which are orders of selecting the external power supply which supplies the power to the secondary battery from among the plurality of external power supplies;
charging the secondary battery with power supplied from the selected external power supply; and
outputting information indicating the selected external power supply.

10. A program for causing a computer to execute:
a detection function of detecting that each of a plurality of external power supplies has been connected;
a power supply status determination function of determining a power supply status indicating whether charging using the plurality of external power supplies is possible based on a detection result of the detection function;
a selection function of selecting an external power supply to be used for charging from among the plurality of external power supplies, based on the power supply status of each of the plurality of external power supplies determined through the power supply status determination function, and priority orders of the external power supplies which are orders of selecting the external power supply which supplies power to the secondary battery from among the plurality of external power supplies;
a charging function of charging the secondary battery with the power supplied from the external power supply selected through the selection function; and an output function of outputting information indicating the external power supply selected through the selection function.
